# EUROPÄISCHE PATENTSCHRIFT

(11) **EP 2 853 368 B1**
(45) Veröffentlichungstag und Bekanntmachung des Hinweises auf die Patenterteilung: **22.02.2017**
(21) Anmeldenummer: 14003081.8
(22) Anmeldetag: 06.09.2014
(51) Int. Cl.: B29C 44/28

(54) **Verfahren zum kontinuierlichen Herstellen eines Endlosstranges aus Polyurethan-Reaktivkunststoff**
Method for continuously forming an endless strand from polyurethane reactive plastic
Procédé de fabrication en continu d'une bande continue en matière plastique réactive à base de polyuréthane

(30) Priorität: 17.09.2013 DE 102013015321
(43) Veröffentlichungstag der Anmeldung: 01.04.2015
(73) Patentinhaber: Hennecke GmbH, 53757 Sankt Augustin (DE)
(72) Erfinder: Schamberg, Martin, 53757 Sankt Augustin (DE); Krupp, Martin, 53773 Hennef (DE)
(74) Vertreter: Gosdin, Michael

(56) Entgegenhaltungen:
- DE-A1- 2 142 450
- DE-A1- 2 434 938
- DE-A1- 2 650 704
- US-A- 3 152 361

## Beschreibung

Die Erfindung betrifft ein Verfahren zum kontinuierlichen Herstellen eines Endlosstranges aus Polyurethan-Reaktivkunststoff,
a) bei dem zunächst die Reaktivkomponenten Polyol und Isocyanat dosiert einem Mischer zugeführt werden,
b) bei dem dann die Reaktivkomponenten im Mischer zu einem Reaktivgemisch vermischt werden,
c) bei dem anschließend das Reaktivgemisch in die Umgebungsatmosphäre ausgetragen wird und
d) bei dem ein kontinuierlich in eine Förderrichtung geförderter erster Bahnabschnitt aus einem flächigen, flexiblen Material, insbesondere eine Papier-, Folien- oder Gewebebahn, mit dem Reaktivgemisch benetzt wird.

Ein gattungsgemäßes Verfahren ist in der DE 10 2006 051 311 A1 offenbart. Ähnliche und andere Lösungen zeigen die DE 21 42 450 A1**,** die DE 24 34 938 A1**,** die DE 26 50 704 A1 und die US 3 152 361 A**.** Dieses Verfahren kann für verschiedene Anwendungen eingesetzt werden, beispielsweise für die Herstellung von flexiblem Blockweichschaum, von geschlossenzelligem Blockhartschaum, von Isolierpanels und von Halbzeugen aus thermoplastischem Polyurethan. Dieses Verfahren kann auf einer Vielzahl von Anlagen mit unterschiedlichen Anlagenkonzepten durchgeführt werden. Beispiele solcher Anlagen sind kontinuierlich arbeitende Blockschaumanlagen sowohl für flexible Schaumsysteme als auch für Hartschaumsysteme.

Die US 5 578 655 A und die US 3 809 512 A offenbaren ähnliche Lösungen.

Die vorliegende Erfindung bezieht sich darüber hinaus auch auf Anlagen zur kontinuierlichen Erzeugung von Sandwichpanels oder Isolierplatten auf sogenannten Doppelplattenbandanlagen.

Eine immer wiederkehrende Aufgabenstellung bei diesen Anlagen bzw. den entsprechenden Verfahren ist der optimale Auftrag des Reaktivgemischs auf das Substrat, welches die Anlagenkomponenten davor schützt, dass sie mit Reaktivgemisch verschmutzt werden. Hinsichtlich der Auftragstechnik sind dabei verschiedene Aspekte zu berücksichtigen:

Zunächst sollten keine Luftblasen in das Reaktivgemisch eingeschlagen werden.

Weiterhin muss die Auftragstechnik eine Verteilung des Reaktivgemischs über die gesamte Produktionsbreite (Breite des Substrats) gewährleisten.

Dabei sollte ferner eine möglichst homogene Altersverteilung des Reaktivgemisches über die Produktionsbreite gewährleistet sein.

Vor dem Hintergrund, dass es sich bei dem Reaktivgemisch in der Regel um Material mit guten Klebeeigenschaften handelt, sollten, nachdem das Reaktivgemisch in die Umgebungsatmosphäre ausgetragen wurde, möglichst keine stationären Anlagenteile vom Reaktivgemisch benetzt werden, um so eine möglichst lange und zuverlässige Produktion der Anlage gewährleisten zu können.

Der Erfindung liegt daher die **Aufgabe** zugrunde, ein gattungsgemäßes Verfahren so fortzubilden, dass die genannten Aspekte verglichen mit den vorbekannten Maßnahmen verbessert realisiert werden können.

Die **Lösung** dieser Aufgabe durch die Erfindung zeichnet sich in Verbindung mit den eingangs genannten Merkmalen dadurch aus, dass das Verfahren weiterhin die Schritte aufweist:
e) Führen des ersten Bahnabschnitts über ein Führungselement, das einen konkav ausgeformten Abschnitt und einen sich in Förderrichtung hieran anschließenden ebenen Abschnitt aufweist;
f) Zuführen zweier seitlicher Bahnabschnitte zum ersten Bahnabschnitt, wobei das Zuführen in die beiden seitlichen Endbereiche (Randbereiche) des ersten Bahnabschnitts erfolgt und wobei der erste Bahnabschnitt und die beiden seitlichen Bahnabschnitte durch Faltung aus einem einzigen Bahnabschnitt aus flächigem Material gebildet werden;
g) Führen der beiden seitlichen Bahnabschnitte und des ersten Bahnabschnitts, so dass eine wannenartige Struktur zur Aufnahme des Reaktivgemisches entsteht, die kontinuierlich in Förderrichtung bewegt wird, wobei der erste Bahnabschnitt derart dichtend mit den seitlichen Bahnabschnitten verbunden ist, dass kein Reaktivgemisch zwischen den Bahnabschnitten in die umgebende Atmosphäre austreten kann.

Das Führen der beiden seitlichen Bahnabschnitte zum ersten Bahnabschnitt erfolgt dabei bevorzugt im Bereich des konkav ausgeformten Abschnitts des Führungselements.

Speziell hat es sich für diese Lösung bewährt, wenn das Verfahren weiterhin die Schritte umfasst: h) Abwickeln einer flachen Bahn des Materials von einer Rolle; i) Durchführen einer ersten und zweiten Falzung der flachen Bahn, bei der die beiden seitlichen, äußeren Abschnitte der Bahn um 180° nach innen gefalzt werden, so dass eine C-Falzung mit einer ersten Falzkante zwischen dem ersten Bahnabschnitt und dem einen seitlichen Bahnabschnitt und mit einer zweiten Falzkante zwischen dem ersten Bahnabschnitt und dem anderen seitlichen Bahnabschnitt entsteht; j) Führen der mit der C-Falzung versehenen Bahn über den konkav ausgeformten Abschnitt des Führungselements; k) Aufkanten der beiden nach innen gefalzten seitlichen Bahnabschnitte im Bereich des konkav ausgeformten Abschnitts, so dass zumindest die äußeren Abschnitte der zunächst um 180° nach innen gefalteten seitlichen Bahnabschnitte derart weitergefalzt bzw. weitergefaltet werden, dass zumindest die äußeren Abschnitte dieser seitlichen Bahnabschnitte senkrecht zum ersten Bahnabschnitt aufgerichtet werden, um zusammen mit dem ersten Bahnabschnitt die wannenartige Struktur zur Aufnahme des Reaktivgemisches zu bilden.

Aus einer einzigen Materialbahn werden hiernach ein mittlerer Bereich und zwei äußere Seitenbereiche gebildet.

Die kontinuierliche Herstellung einer C-Falzung bzw. -Faltung, kann mit sogenannten Formschultern durchgeführt werden (hierzu wird auf die DE 100 32 551 A1 ausdrücklich Bezug genommen, wobei die C-Falzung einen vereinfachten Sonderfall des dort beschriebenen Verfahrens darstellt).

Bevorzugt sind die seitlichen Bahnabschnitte dabei nach der Umformung gemäß obigem Schritt k) im Bereich des konkav ausgeformten Abschnitts im Bereich des ebenen Abschnitts des Führungselements derart geformt, dass jeweils ein Bahnabschnitt senkrecht zum ersten Bahnabschnitt ausgerichtet ist, während ein jeweils weiterer Bahnabschnitt parallel zum ersten Bahnabschnitt ausgerichtet ist.

Bevorzugt wird die durch die seitlichen Bahnabschnitte seitlich begrenzte Wanne dabei im Bereich des konkav ausgeformten Abschnitts in Förderrichtung breiter. Dadurch wird verhindert, dass außen Bereiche entstehen, in denen das Reaktionsgemisch zu lange verweilt, wodurch das Reaktionsgemisch außen zu früh aufschäumen würde. Im Gegensatz dazu würde bei einer Faltmethode, bei der die Wanne in diesem Bereich in Förderrichtung schmaler würde, in dem sich in Förderrichtung verjüngenden Randbereich eine strömungstechnische Totzone entstehen, in der das Reaktivgemisch frühzeitig aufschäumen würde.

Die geometrische Lage der Umformkante für die Umformung von der C-Falzung gemäß obigem Schritt i) in die aufgekantete Lage gemäß obigem Schritt k) im Bereich des konkav ausgeformten Abschnitts ergibt sich bevorzugt als die geometrische Schnittkontur zweier Flächen, wobei die eine Fläche eine Fläche ist, die äquidistant um einen Betrag zwischen 0,1 mm und 5 mm oberhalb des Führungselement verläuft, und wobei die andere Fläche eine Ebene ist, die die Schnittgerade zwischen dem ersten Bahnabschnitt und dem gemäß obigem Schritt k) senkrecht aufgerichteten Bahnabschnitt umfasst, wobei diese Ebene gegenüber dem senkrecht aufgerichteten Bahnabschnitt um die Förderrichtung um einen Winkel, vorzugsweise um 45°, zum Inneren der wannenartigen Struktur geneigt ist.

Im Bereich in Förderrichtung hinter dem konkav ausgeformten Abschnitt des Führungselements wird die Auflage für den ersten Bahnabschnitt bevorzugt durch ein umlaufendes Band gebildet. Es ist dabei möglich, dass der sich an den konkav ausgeformten Abschnitt anschließende ebene Abschnitt des Führungselements durch das umlaufende Band gebildet wird; bei dem ebenen Abschnitt wird also primär auf die Funktionalität abgestellt, nicht auf die einstückige Ausbildung mit dem Führungselement.

Das gefalzte, flache, bahnförmige Substrat der parallelen weiteren Bahnabschnitte sowie die sich zwischen diesen Bahnabschnitten und dem umlaufenden Band befindlichen Abschnitte des ersten Bahnabschnitts werden bevorzugt mittels Rollen auf das umlaufende Band gepresst, so dass ein ausreichender Reibverbund zwischen dem umlaufenden Band und dem Substrat entsteht, um das bahnförmige Substrat synchron mit dem umlaufenden Band mitzufördern.

Eine verbesserte Handhabung des flächigen, flexiblen Substrats kann erreicht werden, wenn gemäß einer Weiterbildung vorgesehen wird, dass der erste Bahnabschnitt des flächigen, flexiblen Materials im Bereich des konkav ausgeformten Abschnitts des Führungselements durch Unterdruck auf der Oberfläche des Führungselements gehalten wird.

Bei Blockschaumanwendungen, bei denen häufig Blockhöhen von mehr als einem Meter erreicht werden, wird in der Regel dann zusätzlich noch eine weitere Trennbahn von der Seite zugeführt, welche als Trennbahn zwischen dem Block und der Seitenwand dient. Möglich ist aber auch, dass die oben genannten seitlichen Bahnabschnitte so breit bzw. hoch sind, dass diese selbst für die gesamte Blockhöhe bereits als seitliche Trennbahn dienen.

Somit entsteht aus den beiden seitlichen Bahnabschnitten, d. h. aus den Trennbahnen, im Zusammenspiel mit dem ersten Bahnabschnitt eine ausgekleidete Wanne für das Reaktivgemisch, die kontinuierlich in Förderrichtung bewegt wird, wobei diese Wanne entgegen der Förderrichtung durch den ersten Bahnabschnitt begrenzt wird und die quer zur Förderrichtung (Produktionsrichtung) durch die beiden seitlichen Bahnabschnitte begrenzt wird.

Eine wichtige und unterstützende Rolle kommt im gegebenen Falle in diesem Zusammenhang dem Förder- und Falzkonzept der flächigen und flexiblen Trennbahnen zu, zwischen denen das Reaktivgemisch zu einem Endlosstrang ausreagiert.

Ein Vorteil der vorgeschlagenen Verfahrensweise ist darin zu sehen, dass es durch das Verfahren gleichzeitig ermöglicht wird, mittels der kontinuierlich geförderten Bahnabschnitte sowohl eine seitliche Barriere für das Reaktivgemisch zu erzeugen, indem die seitlichen Bahnabschnitte an den Seiten nach oben gefalzt werden, als auch eine Barriere gegenüber einem Zurückfließen des Reaktivgemischs entgegen der Transportrichtung zu erzeugen.

Es gilt dabei, dass es sich bei dem ersten Bahnabschnitt und den weiteren seitlichen Bahnabschnitten um eine einzige, zusammenhängende Bahn handelt, die durch entsprechende Faltung in einen zentralen Bereich und zwei äußere Bereiche unterteilt wird.

Ein wesentlicher Vorteil des vorgeschlagenen Verfahrens ist darin zu sehen, dass es ein knitterfreies Falzen der Trennbahnen ermöglicht, selbst bei Einsatz von Papier, welches aufgrund seiner geringen Dehnbarkeit sehr exakt gefaltet werden muss, damit es nicht knittert oder reißt.

Dies wird dadurch ermöglicht, dass die erfindungsgemäße Umformung der seitlichen Bahnabschnitte in dem Bereich durchgeführt wird, in dem das Substrat über einen konkav ausgeformten Untergrund geführt wird. Gleichzeitig ermöglicht dieses Faltkonzept das Erzeugen einer entgegen der Förderrichtung und zu den Seiten mit kontinuierlich bewegten Trennbahnen ausgekleideten Wanne. Dies stellt z. B. gegenüber der Produktionsweise, bei der das Reaktionsgemisch zunächst in einem Trog aufschäumt und anschließend auf das Förderband ausgetragen wird, einen wesentlichen Vorteil dar, da dieser nicht mit kontinuierlich bewegten Trennbahnen ausgekleidet werden kann, und sich folglich im Laufe einer Produktion Material an den Wandungen des Troges absetzt und dort kleben bleibt.

Das knitterfreie Aufkanten der äußeren Bahnabschnitte wird durch eine spezielle, vorteilhafte Ausgestaltung des Verfahrens möglich, bei der die geometrische Lage der in Förderrichtung linken Umformkante für besagte Umformung des in Förderrichtung gesehen linken Bahnabschnitt im Bereich des substratseitig konkav ausgeformten Untergrundes sich als die geometrische Schnittkontur zweier Flächen ergibt, wobei es sich bei der ersten Fläche um eine in Förderrichtung gewölbte und quer zur Förderrichtung gerade Fläche handelt, die dadurch definiert ist, dass sie um 0,1 bis 5 mm höhenversetzt (parallel) zur Oberfläche des substratseitig konkav ausgeformten Untergrundes verläuft, und wobei die zweite Fläche eine Ebene ist, die sich dadurch ergibt, dass die Ebene des seitlich aufsteigenden Bahnabschnitts im Uhrzeigersinn um 45° um die Schnittkontur des linken Bahnabschnitts mit dem mittleren Bahnabschnitt geschwenkt wird. Ebenso vorgesehen ist natürlich auch eine entsprechende Umformung der in Förderrichtung rechten Umformkante.

Die dabei bereits aufgekanteten seitlichen Substratabschnitte können im Bereich der konkaven Ausformung z. B. mit Hilfe von mitlaufenden Rollen oder Walzen aber auch mit Hilfe von unbewegten Formkörpern, unter denen die nicht benetzten parallel zum ersten Bahnabschnitt verlaufenden seitlichen Bahnabschnitte hergezogen werden, sehr gut durch die konkave Ausformung geführt werden.

In einer vorteilhaften Ausgestaltung des Verfahrens wird dies, insbesondere, um auch den ersten, mittleren Bahnabschnitt sicher aufliegend über die substratseitig konkave Ausformung des Untergrundes zu führen, durch Anlegen eines Vakuums in der konkaven Ausformung unterstützt. Es hat sich gezeigt, dass Unterdrücke von weniger als 300 mbar zu diesem Zweck völlig ausreichend sind.

Somit ermöglicht insbesondere das vorgeschlagene Falzkonzept im Zusammenspiel mit einem weiteren Substrat das Erzeugen eines vollständig mit bewegten Bahnen ausgekleideten Anstaubeckens.

Das erfindungsgemäße Verfahren kann demgemäß in einer weiteren vorteilhaften Ausgestaltung so durchgeführt werden,
- dass eine weitere kontinuierlich geförderte, flache und bahnförmige Decktrennbahn (Decksubstrat) mit dem Polyurethan-Reaktivgemisch benetzt wird,
- dass das Polyurethan-Reaktivgemisch zwischen diesen beiden Substraten, unter chemischer oder physikalischer Gasentwicklung in der sogenannten Steigzone, aufsteigt,
- wobei der erste Bahnabschnitt (Bodensubstrat) im wesentlichen unterhalb und die Decktrennbahn im Wesentlichen oberhalb des aufsteigenden Polyurethan-Reaktivgemischs verläuft, und
- wobei das Polyurethan-Reaktivgemisch anschließend zu einem Endlosstrang aus Schaumstoff ausreagiert.

Dies ermöglicht es, das Verfahren in einer weiteren vorteilhaften Ausgestaltung so auszuführen,
- dass das Polyurethan-Reaktivgemisch nach dem Austrag in die Umgebungsatmosphäre durch die Aufgabeöffnung in eine Anstaukammer hinein fließt, die in vertikaler Richtung ausgedehnt und nach den Seiten hin geschlossen ist, und im Bereich des Bodens in eine Spaltöffnung mündet,
- das Polyurethan-Reaktionsgemisch in der Anstaukammer aufgestaut wird, so dass am Boden der Anstaukammer über die gesamte Breite statischer Druck erzeugt wird, und das Polyurethan-Reaktionsgemisch die Anstaukammer von oben nach unten durchfließt, und
- das Polyurethan-Reaktionsgemisch anschließend durch die Spaltöffnung aus der Anstaukammer ausströmt.

Diesbezüglich wird ausdrücklich auf die DE 10 2006 051 311 A1 Bezug genommen, wo ein solches Teilverfahren bereits beschrieben ist, womit eine kontinuierliche Herstellung von Blockweichschaum bei sehr niedrigen Fördergeschwindigkeiten im Bereich von 0,5 bis 3 m/min möglich ist.

Der Vorteil dieses Verfahrens ist in der im Vergleich zu herkömmlichen Blockschaumanlagen sehr kurzen Länge der Anlage zu sehen, wodurch die Investitionskosten nicht nur für die Anlage selbst, sondern vor allem auch für die Gebäude, deutlich reduziert werden können. Vor allem gilt dies vor dem Hintergrund dass Blockschaumanlagen in vielen Fällen schlecht ausgelastet sind, da die Produktionsgeschwindigkeiten verfahrensbedingt deutlich größer sind als notwendig.

Somit ermöglicht das erfindungsgemäße Verfahren eine optimale Umsetzung des in der DE 10 2006 051 311 A1 beschriebenen Verfahrens, dessen Vorteile detailliert in diesem Dokument erläutert sind.

Um das Decksubstrat dichtend zur Aufkantung mit dem Bodensubstrat zu führen, wird weiter vorgeschlagen, das Verfahren so zu gestalten,
- dass eine weitere kontinuierlich geförderte, flache und bahnförmige Decktrennbahn mit dem Polyurethan-Reaktivgemisch benetzt wird,
- dass das Polyurethan-Reaktivgemisch zwischen diesen beiden Trennbahnen, unter chemischer oder physikalischer Gasentwicklung in der sogenannten Steigzone, aufsteigt,
- wobei der erste Bahnabschnitt im wesentlichen unterhalb und die Decktrennbahn im Wesentlichen oberhalb des aufsteigenden Polyurethan-Reaktivgemischs verläuft und
- wobei das Polyurethan-Reaktivgemisch anschließend zu einem Endlosstrang aus Schaumstoff ausreagiert.

Zur optimalen Umsetzung des in der DE 10 2006 051 311 A1 beschriebenen Verfahrens zur kontinuierlichen Herstellung von Blockweichschaum wird weiter vorgeschlagen,
- dass das Polyurethan-Reaktivgemisch nach dem Austrag in die Umgebungsatmosphäre durch die Aufgabeöffnung in eine Anstaukammer hinein fließt, die in vertikaler Richtung ausgedehnt und nach den Seiten hin geschlossen ist, und im Bereich des Bodens in eine Spaltöffnung mündet,
- dass das Polyurethan-Reaktionsgemisch in der Anstaukammer aufgestaut wird, so dass am Boden der Anstaukammer über die gesamte Breite statischer Druck erzeugt wird, und das Polyurethan-Reaktionsgemisch die Anstaukammer von oben nach unten durchfließt, und
- dass das Polyurethan-Reaktionsgemisch anschließend durch die Spaltöffnung aus der Anstaukammer ausströmt.

Dadurch steht ein Verfahren zur Verfügung, das es ermöglicht, auch hohe Blöcke bei sehr niedrigen Fördergeschwindigkeiten und entsprechend steilen Steigprofilen herzustellen. Die Vorteile werden ausführlich in der DE 10 2006 051 311 A1 erläutert.

In den Zeichnungen ist ein Ausführungsbeispiel dargestellt. Es zeigen:
- Fig. 1: schematisch in perspektivischer Ansicht einen Bereich einer Anlage zur Herstellung eines Endlosstranges aus Polyurethan-Reaktivkunststoff, bei der erfindungsgemäß eine wannenförmige Aufnahmestruktur für das Reaktivgemisch aus einer einzigen Bahn eines Materials gebildet wird,
- Fig. 2: in der Darstellung gemäß Fig. 1 die Anlage, wobei hier - nicht gemäß der Erfindung - seitliche Bereiche einer wannenförmigen Struktur aus separaten Materialbahnen gebildet werden,
- Fig. 3: in perspektivischer Ansicht ein Detail der Anlage gemäß Fig. 1,
- Fig. 4: in perspektivischer Ansicht ein weiteres Detail der Anlage gemäß Fig. 1 und
- Fig. 5: schematisch in der Seitenansicht die Anlage gemäß Fig. 1.

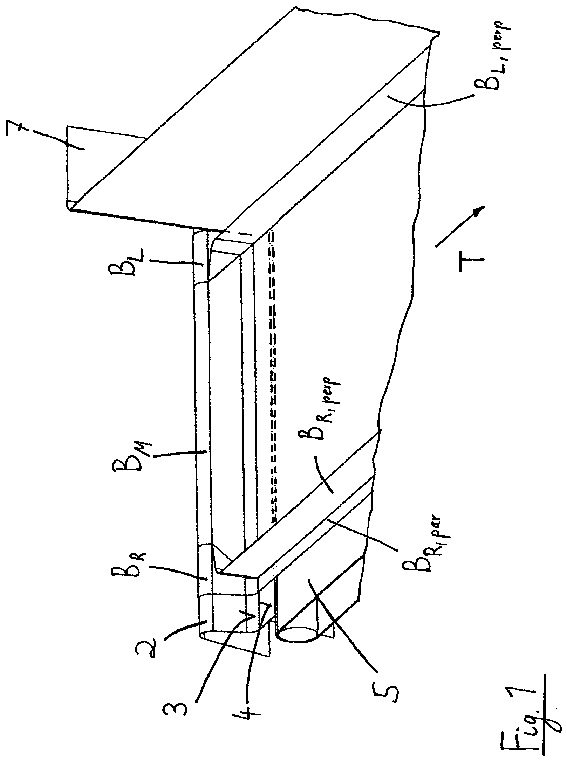

In Fig. 1 ist eine perspektivische Ansicht eines Bereichs einer Anlage zur Herstellung eines Endlosstranges aus Polyurethan-Reaktivkunststoff zu sehen, in dem ein Führungselement 2 aus Blech den substratseitigen (d. h. dem herzustellenden Reaktivkunststoff zugewandten) Untergrund bildet. Dieser Untergrund, d. h. die Oberfläche des Führungselements 2, weist einen konkav ausgeformten Abschnitt 3 auf, an den sich in Förderrichtung T ein ebener Bereich 4 anschließt. Konkret besteht der Untergrund zunächst aus dem aus Blech bestehenden Führungselement 2 und geht anschließend in ein umlaufendes Transportband 5 über.

Ebenfalls dargestellt ist ein kontinuierlich geförderter, bahnförmiger, zentraler, erste Bahnabschnitt B_{M}, welcher unmittelbar oberhalb des Blechs 2 und des Bandes 5 verläuft.

Seitlich außen sind zwei seitliche Bahnabschnitte B_{L} und B_{R} dargestellt, welche im Bereich des konkav ausgeformten Abschnitts 3 so umgeformt werden, dass im Zusammenspiel mit dem ersten Bahnabschnitt B_{M} eine mit kontinuierlich bewegten Trennbahnen ausgekleidete Wanne für das Reaktivgemisch entsteht. Diese Wanne ist entgegen der Förderrichtung T durch den besagten ersten Bahnabschnitt B_{M} begrenzt; dieser wird wiederum quer zur Förderrichtung T durch die beiden seitlichen Bahnabschnitte B_{L} und B_{R} begrenzt, wobei der erste Bahnabschnitt B_{M} derart dichtend mit den seitlichen Bahnabschnitten B_{L} und B_{R} verbunden ist, dass kein Reaktionsgemisch zwischen diesen Bahnabschnitten in die umgebende Atmosphäre austreten kann.

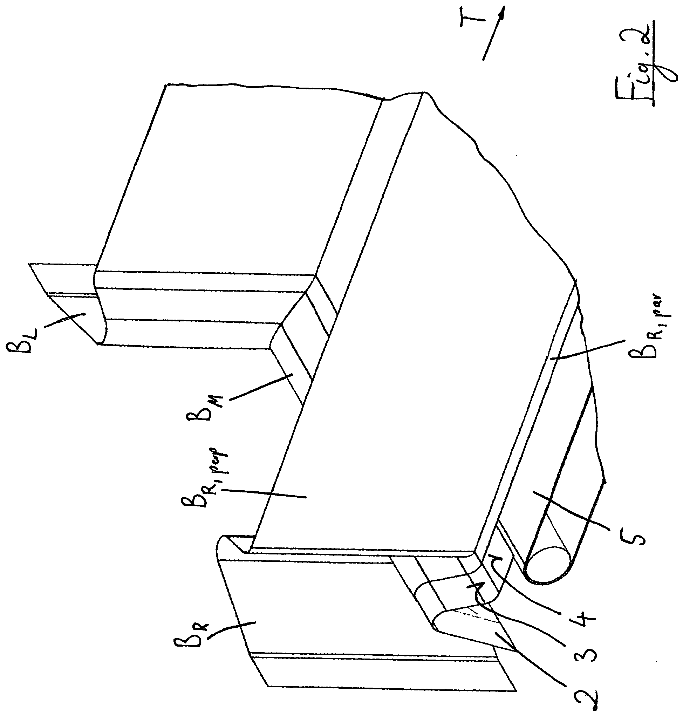

Dabei kann es sich bei dem ersten Bahnabschnitt B_{M} und den seitlichen Bahnabschnitten B_{L} und B_{R} einerseits um ursprünglich getrennte Bahnen (s. hierzu Fig. 2) als auch um eine einzige zusammenhängende Bahn handeln, die durch entsprechende Faltung in einen zentralen und zwei äußere Bereiche unterteilt wurde. In Fig. 1 ist der Fall dargestellt, bei dem eine einzige Bahn zum Einsatz kommt, die entsprechend zur Wanne gefaltet wird. Nach der Umformung bzw. Umfaltung bestehen die seitlichen Bahnabschnitte B_{L} und B_{R} hier jeweils aus einem linken seitlichen Bahnabschnitt B_{L,perp} und einem rechten seitlichen Bahnabschnitt B_{R,perp}, die jeweils senkrecht zum ersten Bahnabschnitt B_{M} ausgerichtet sind; ferner vorhanden ist ein linker paralleler Bahnabschnitt B_{L,par} und ein rechter paralleler Bahnabschnitt B_{R,par}, die jeweils parallel zum ersten Bahnabschnitt B_{M} ausgerichtet sind.

Bei Blockschaumanwendungen wird in der Regel zusätzlich noch eine seitliche Trennbahn 7 von der Seite zugeführt, welche als Trennbahn zwischen dem Block und der Seitenwand dient. Dieses ist in Fig. 1 (aus Darstellungsgründen nur auf der linken Seite) dargestellt.

Möglich ist aber auch, dass die seitlichen Bahnabschnitte B_{L} und B_{R} so breit bzw. hoch sind, dass diese selbst für die gesamte Blockhöhe bereits als seitliches Trennsubstrat dienen. Dies ist vor allem bei Anwendungen denkbar, in denen nur geringe Schäumhöhen (z. B. weniger als 300 mm) erreicht werden.

In Fig. 2 ist eine Variante zu Fig. 1 dargestellt. Hierbei handelt es sich um eine Lösung, bei der der erste Bahnabschnitt B_{M} und die seitlichen Bahnabschnitte B_{L} und B_{R} zunächst separat ausgeführt sind, d. h. sie sind ursprünglich nicht mit dem ersten Bahnabschnitt B_{M} verbunden. Außerdem sind diese so breit bzw. hoch gewählt, dass diese selbst für Blockhöhen über ein Meter für die gesamte Blockhöhe bereits als seitliches Trennsubstrat dienen können. Damit kein Reaktivgemisch zwischen diesen seitlichen Substratabschnitten und dem ersten, zentralen Bahnabschnitt austreten kann, ist es empfehlenswert, die insgesamt drei Bahnabschnitte miteinander zu verkleben.

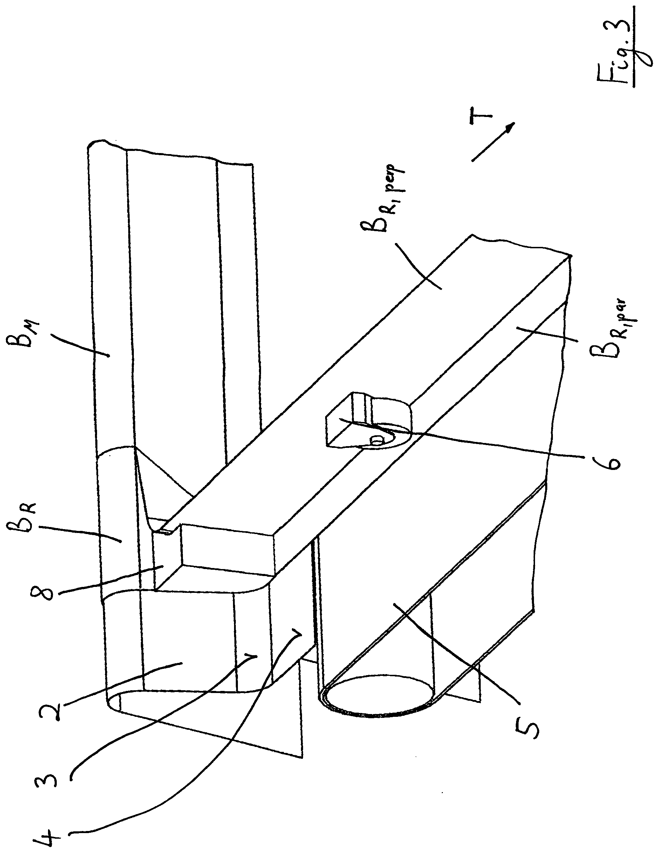

In Fig. 3 ist beispielhaft die in Transportrichtung rechte Formschulter 8 für die Umformung des rechten Bahnabschnitts B_{R} dargestellt. Man erkennt hier auch, wie die Formschulter 8 den äußeren Teil des Bahnabschnitts B_{M} sowie den Bahnabschnitt B_{R,par} führt. Um den Bahnabschnitt B_{M} vollständig sicher unmittelbar auf dem Führungselement 2 (Untergrundblech) zu führen, ist zusätzlich das nicht weiter dargestellte Anlegen eines Vakuums in der konkaven Ausformung 3 des Führungselements 2 zu empfehlen.

Außerdem ist in Fig. 3 beispielhaft eine Rolle 6 (Andrückrolle) dargestellt, mit der ein Reibschluss zwischen dem Substrat und dem umlaufenden Förderband 5 erzielt werden kann. Zwischen der Andrückrolle 6 und dem aufgekanteten Bahnstreifen B_{R,perp} verläuft in der Regel die Seitenwand und ggf. noch eine weitere seitliche Trennbahn (siehe Fig. 1), die jedoch in Fig. 3 nicht dargestellt sind. Die Andrückrollen 6 werden vorzugsweise über eine Feder oder pneumatisch mit einer definierten Kraft gegen das Band 5 gedrückt.

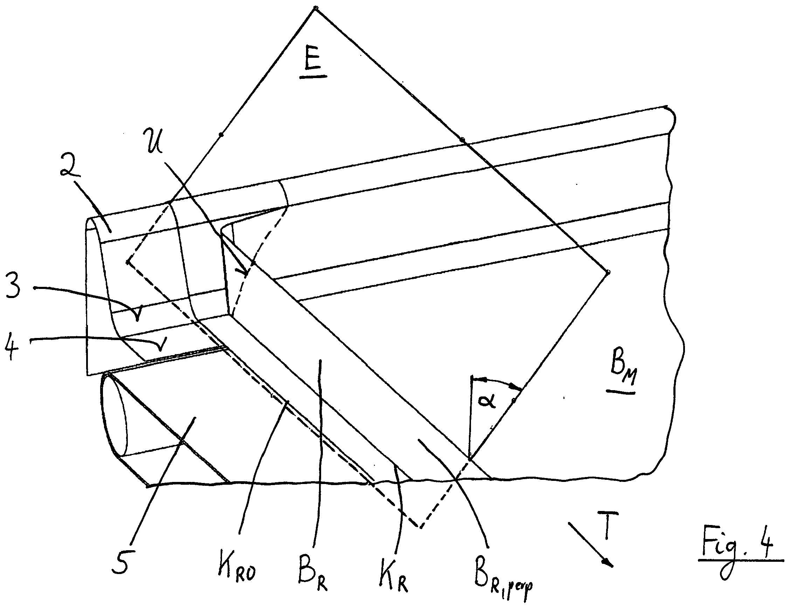

In Fig. 4 ist beispielhaft eine Umformkante U für die Umformung des in Förderrichtung T rechten Bahnabschnitts B_{R} dargestellt. Die Umformkante U ergibt sich durch die Schnittkontur der Ebene E mit einer gedachten gekrümmten Fläche, die unmittelbar oberhalb des Führungselements 2 mit dem substratseitig konkav ausgeformten Abschnitt 3 und parallel zur Oberfläche des Führungselements 2 verläuft. Die Ebene E ergibt sich, wenn die Ebene, in welcher der Bahnabschnitt B_{R,perp} liegt, um einen Winkel α von 45° um die Falzkante K_{R} geschwenkt wird. Dargestellt sind außerdem noch die Falzkante K_{R0}, die sich bei der oben erläuterten C-Falzung ergibt, bei der die seitlichen Bahnabschnitte B_{L} und B_{R} des Bahnabschnitts B_{M} zunächst um 180° nach innen gefaltet werden. Analog zu den abgebildeten rechtsseitigen Falzkanten K_{R} und K_{R0} gibt es natürlich linksseitig auch die entsprechenden Falzkanten K_{L} und K_{L0}, die jedoch nicht dargestellt sind.

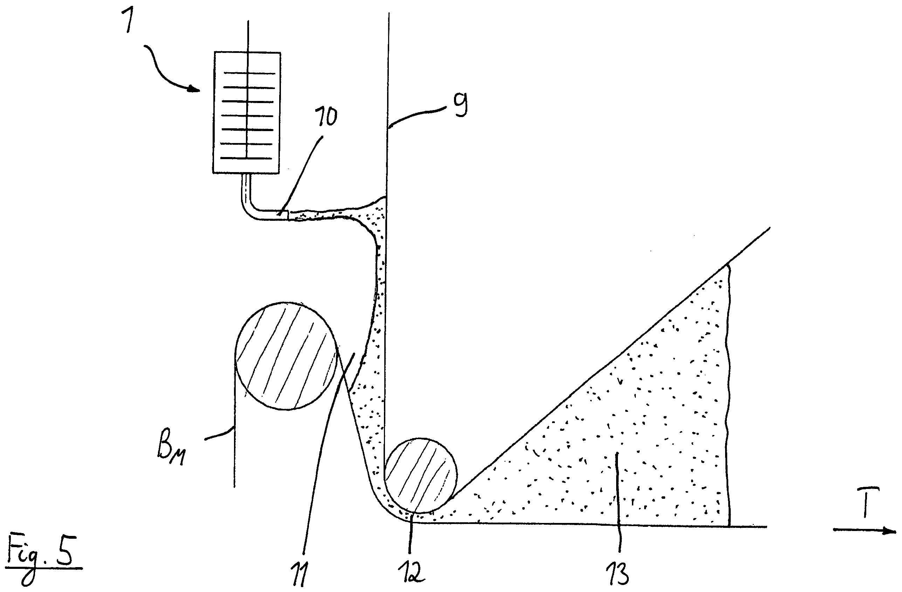

In Fig. 5 ist eine schematische seitliche Schnittdarstellung zu sehen, in der die Decktrennbahn 9, die Ausgabeöffnung 10 des Mischers 1, das Anstaubecken 11 sowie die Spaltöffnung 12 am Übergang des Anstaubeckens 11 in die Steigzone 13 zu erkennen sind. Das Reaktivgemisch benetzt in diesem Fall zunächst die Decktrennbahn 9, wird im Anstaubecken 11 durch die Spaltöffnung 12 angestaut, so dass sich im Anstaubecken 11 ein statischer Flüssigkeitsdruck aufbaut, der dann den statischen Druck des steil aufsteigenden Schaums in der Steigzone 16 kompensiert, so dass das Reaktionsgemisch auch bei sehr niedrigen Fördergeschwindigkeiten nicht entgegen der Förderrichtung T gedrückt wird.

### Bezugszeichenliste:

- 1: Mischer
- 2: Führungselement
- 3: konkav ausgeformter Abschnitt
- 4: ebener Abschnitt
- 5: Band
- 6: Rolle
- 7: seitliche Trennbahn
- 8: Formschulter
- 9: Decktrennbahn
- 10: Ausgabeöffnung
- 11: Anstaubecken
- 12: Spaltöffnung
- 13: Steigzone

- B_{M}: erster Bahnabschnitt
- B_{L}: linker seitlicher Bahnabschnitt
- B_{R}: rechter seitlicher Bahnabschnitt
- K_{L}: erste (linke) Falzkante
- K_{R}: zweite (rechte) Falzkante
- K_{L0}: Falzkante
- K_{R0}: Falzkante
- B_{L,perp}: linker senkrechter Bahnabschnitt
- B_{R,perp}: rechter senkrechter Bahnabschnitt
- B_{L,par}: linker paralleler Bahnabschnitt
- B_{R,}pₐᵣ: rechter paralleler Bahnabschnitt
- U: Umformkante
- E: Ebene
- α: Winkel

- T: Förderrichtung

## Patentansprüche

1. Verfahren zum kontinuierlichen Herstellen eines Endlosstranges aus Polyurethan-Reaktivkunststoff,
a) bei dem zunächst die Reaktivkomponenten Polyol und Isocyanat dosiert einem Mischer (1) zugeführt werden,
b) bei dem dann die Reaktivkomponenten im Mischer (1) zu einem Reaktivgemisch vermischt werden,
c) bei dem anschließend das Reaktivgemisch in die Umgebungsatmosphäre ausgetragen wird und
d) bei dem ein kontinuierlich in eine Förderrichtung (T) geförderter erster Bahnabschnitt (B_{M}) aus einem flächigen, flexiblen Material, insbesondere eine Papier-, Folien- oder Gewebebahn, mit dem Reaktivgemisch benetzt wird,
wobei das Verfahren weiterhin die Schritte aufweist:
e) Führen des ersten Bahnabschnitts (B_{M}) über ein Führungselement (2), das einen konkav ausgeformten Abschnitt (3) und einen sich in Förderrichtung (T) hieran anschließenden ebenen Abschnitt (4) aufweist;
f) Zuführen zweier seitlicher Bahnabschnitte (B_{L}, B_{R}) zum ersten Bahnabschnitt (B_{M}), wobei das Zuführen in die beiden seitlichen Endbereiche des ersten Bahnabschnitts (B_{M}) erfolgt und wobei der erste Bahnabschnitt (B_{M}) und die beiden seitlichen Bahnabschnitte (B_{L}, B_{R}) durch Faltung aus einem einzigen Bahnabschnitt aus flächigem Material gebildet werden;
g) Führen der beiden seitlichen Bahnabschnitte (B_{L}, B_{R}) und des ersten Bahnabschnitts (B_{M}), so dass eine wannenartige Struktur zur Aufnahme des Reaktivgemisches entsteht, die kontinuierlich in Förderrichtung (T) bewegt wird, wobei der erste Bahnabschnitt (B_{M}) derart dichtend mit den seitlichen Bahnabschnitten (B_{L}, B_{R}) verbunden ist, dass kein Reaktivgemisch zwischen den Bahnabschnitten (B_{M}, B_{L}, B_{R}) in die umgebende Atmosphäre austreten kann.

2. Verfahren nach Anspruch 1, **dadurch gekennzeichnet, dass** das Zusammenführen der beiden seitlichen Bahnabschnitte (B_{L}, B_{R}) zum ersten Bahnabschnitt (B_{M}) im Bereich des konkav ausgeformten Abschnitts (3) des Führungselements (2) erfolgt.

3. Verfahren nach Anspruch 1 oder 2, **dadurch gekennzeichnet, dass** das Verfahren weiterhin die Schritte umfasst:
h) Abwickeln einer flachen Bahn des Materials von einer Rolle;
i) Durchführen einer ersten und zweiten Falzung der flachen Bahn, bei der die beiden seitlichen, äußeren Abschnitte der Bahn um 180° nach innen gefalzt werden, so dass eine C-Falzung mit einer ersten Falzkante (K_{L0}) zwischen dem ersten Bahnabschnitt (B_{M}) und dem einen seitlichen Bahnabschnitt (B_{L}) und mit einer zweiten Falzkante (K_{R0}) zwischen dem ersten Bahnabschnitt (B_{M}) und dem anderen seitlichen Bahnabschnitt (B_{R}) entsteht;
j) Führen der mit der C-Falzung versehenen Bahn über den konkav ausgeformten Abschnitt (3) des Führungselements (2);
k) Aufkanten der beiden nach innen gefalzten seitlichen Bahnabschnitte (B_{L}, B_{R}) im Bereich des konkav ausgeformten Abschnitts (3), so dass zumindest die äußeren Abschnitte der zunächst um 180° nach innen gefalteten seitlichen Bahnabschnitte (B_{L}, B_{R}) derart weitergefalzt werden, dass zumindest die äußeren Abschnitte (B_{L,perp}, B_{R,perp}) dieser seitlichen Bahnabschnitte (B_{L}, B_{R}) senkrecht zum ersten Bahnabschnitt (B_{M}) aufgerichtet werden, um zusammen mit dem ersten Bahnabschnitt (B_{M}) die wannenartige Struktur zur Aufnahme des Reaktivgemisches zu bilden.

4. Verfahren nach Anspruch 3, **dadurch gekennzeichnet, dass** die seitlichen Bahnabschnitte (B_{L}, B_{R}) nach der Umformung gemäß Schritt k) von Anspruch 3 im Bereich des konkav ausgeformten Abschnitts (3) im Bereich des ebenen Abschnitts (4) des Führungselements (2) derart geformt sind, dass jeweils ein Bahnabschnitt (B_{L,perp}, B_{R,perp}) senkrecht zum ersten Bahnabschnitt (B_{M}) ausgerichtet ist, während ein jeweils weiterer Bahnabschnitt (B_{L,par}, B_{R,par}) parallel zum ersten Bahnabschnitt (B_{M}) ausgerichtet ist.

5. Verfahren nach einem der Ansprüche 1 bis 4, **dadurch gekennzeichnet, dass** die durch die seitlichen Bahnabschnitte (B_{L}, B_{R}) seitlich begrenzte Wanne im Bereich des konkav ausgeformten Abschnitts (3) bei Fortschreiten in Förderrichtung (T) breiter wird.

6. Verfahren nach einem der Ansprüche 3 bis 5, **dadurch gekennzeichnet, dass** die geometrische Lage der Umformkante (U) für die Umformung von der C-Falzung gemäß Schritt i) von Anspruch 3 in die aufgekantete Lage gemäß Schritt k) von Anspruch 3 im Bereich des konkav ausgeformten Abschnitts (3) sich als die geometrische Schnittkontur zweier Flächen ergibt, wobei die eine Fläche eine Fläche ist, die äquidistant um einen Betrag zwischen 0,1 mm und 5 mm oberhalb des Führungselement (2) verläuft, und wobei die andere Fläche eine Ebene (E) ist, die die Schnittgerade zwischen dem ersten Bahnabschnitt (B_{M}) und dem gemäß Schritt k) von Anspruch 3 senkrecht aufgerichteten Bahnabschnitt (B_{L,perp}, B_{R,perp}) umfasst, wobei diese Ebene (E) gegenüber dem senkrecht aufgerichteten Bahnabschnitt (B_{L,perp}, B_{R,perp}) um die Förderrichtung (T) um einen Winkel (α), vorzugsweise um 45°, zum Inneren der wannenartigen Struktur geneigt ist.

7. Verfahren nach einem der Ansprüche 1 bis 6, **dadurch gekennzeichnet, dass** im Bereich in Förderrichtung (T) hinter dem konkav ausgeformten Abschnitt (3) des Führungselements (2) die Auflage für den ersten Bahnabschnitt (B_{M}) durch ein umlaufendes Band (5) gebildet wird.

8. Verfahren nach Anspruch 4 und Anspruch 7, **dadurch gekennzeichnet, dass** das gefalzte, flache, bahnförmige Substrat der parallelen weiteren Bahnabschnitte (B_{L,par}, B_{R,par}) sowie die sich zwischen diesen Bahnabschnitten (B_{L,par}, B_{R,par}) und dem umlaufenden Band (5) befindlichen Abschnitte des ersten Bahnabschnitts (B_{M}) mittels Rollen (6) auf das umlaufende Band (5) gepresst werden, so dass ein ausreichender Reibverbund zwischen dem umlaufenden Band (5) und dem Substrat entsteht, um das bahnförmige Substrat synchron mit dem umlaufenden Band (5) mitzufördern.

9. Verfahren nach einem der Ansprüche 1 bis 8, **dadurch gekennzeichnet, dass** der erste Bahnabschnitt (B_{M}) des flächigen, flexiblen Materials im Bereich des konkav ausgeformten Abschnitts (3) des Führungselements (2) durch Unterdruck auf der Oberfläche des Führungselements (2) gehalten wird.

## Claims

1. Method for the continuous production of an endless string of polyurethane reactive plastic material,
a) at which at first the reactive components polyol and isocyanate are conveyed to a mixer (1) in a metered manner,
b) at which then the reactive components are mixed in the mixer (1) to a reactive mixture,
c) at which subsequently the reactive mixture is discharged into the environmental atmosphere and
d) at which a first sheet section (B_{M}) made from a plane, flexible material, especially a paper, foil or textile sheet, which is conveyed continuously into a transporting direction (T) is coated with the reactive mixture,
wherein the method further comprises the steps:
e) Guiding of the first sheet section (B_{M}) across a guiding element (2), which has a concave formed section (3) and a flat section (4) which follows the concave formed section (3) in transporting direction (T);
f) Feeding of two lateral sheet sections (B_{L}, B_{R}) to the first sheet section (B_{M}), wherein the feeding occurs into the two lateral end sections of the first sheet section (B_{M}) and wherein the first sheet section (B_{M}) and the two lateral sheet sections (B_{L}, B_{R}) are formed by folding of a single sheet section made of a plane material;
g) Guiding of the two lateral sheet sections (B_{L}, B_{R}) and the first sheet section (B_{M}) so that a bowl-shaped structure is formed for the reception of the reactive mixture which is moved continuously in transporting direction (T), wherein the first sheet section (B_{M}) is connected with the lateral sheet sections (B_{L}, B_{R}) in such a sealed manner so that no reactive mixture can leak into the surrounding atmosphere between the sheet sections (B_{M}, B_{L}, B_{R}).

2. Method according to claim 1, **characterized in that** the merging of the two lateral sheet sections (B_{L}, B_{R}) to the first sheet section (B_{M}) occurs in the region of the concave formed section (3) of the guiding element (2).

3. Method according to claim 1 or 2, **characterized in that** the method further comprises the steps of:
h) Unwinding of a plane sheet of the material from a roll;
i) Carrying out of a first and a second folding of the plane sheet at which the two lateral outer sections of the sheet are folded to the inner side by 180° so that a C-folding is created with a first fold edge (K_{L0}) between the first sheet section (B_{M}) and one of the lateral sheet sections (B_{L}) and with a second fold edge (K_{R0}) between the first sheet section (B_{M}) and the other lateral sheet section (B_{R});
j) Guiding of the sheet which is performed with the C-folding across the concave formed section (3) of the guiding element (2);
k) Edging of the two lateral sheet sections (B_{L}, B_{R}) which are folded to the inner side in the region of the concave formed section (3) so that at least the outer sections of the lateral sheet sections (B_{L}, B_{R}) which are at first folded to the inner side by 180° are further folded in that manner that at least the outer sections (B_{L,perp}, B_{R,perp}) of those lateral sheet sections (B_{L}, B_{R}) are erected vertically to the first sheet section (B_{M}) to form the bowl-shaped structure for the reception of the reactive mixture together with the first sheet section (B_{M}).

4. Method according to claim 3, **characterized in that** the lateral sheet sections (B_{L}, B_{R}) after deforming according to step k) of claim 3 are formed in the region of the concave formed section (3) in the region of the flat section (4) of the guiding element (2) in such a manner that each one of the sheet sections (B_{L,perp}, B_{R,perp}) is aligned perpendicular to the first sheet section (B_{M}) while a respective further sheet section (B_{L,par}, B_{R,par}) is aligned parallel to the first sheet section (B_{M}).

5. Method according to one of claims 1 to 4, **characterized in that** the by means of the laterally sheet sections (B_{L}, B_{R}) laterally delimited bowl becomes wider when advancing in transporting direction (T) in the region of the concave formed section (3).

6. Method according to one of claims 3 to 5, **characterized in that** the geometrical position of the deformation edge (U) for the deformation of the C-folding according to step i) of claim 3 into the edged position according to step k) of claim 3 in the region of the concave formed section (3) results as the geometrical section of two areas, wherein one of the areas is an area which is arranged equidistantly above the guiding element (2) by an amount between 0.1 mm and 5 mm and wherein the other area is an area (E) which comprises the line of intersection between the first sheet section (B_{M}) and the vertical erected sheet section (B_{L,perp}, B_{R,perp}) according to step k) of claim 3, wherein this plane (E) is inclined relatively to the vertical erected sheet section (B_{L,perp}, B_{R,perp}) along the transporting direction (T) by an angle (α), preferably by 45°, to the inner of the bowl-shaped structure.

7. Method according to one of claims 1 to 6, **characterized in that** in the region in transporting direction (T) behind the concave formed section (3) of the guiding element (2) the support for the first sheet section (B_{M}) is formed by a revolving band (5).

8. Method according to claim 4 and claim 7, **characterized in that** the folded, flat, sheet-shaped substrate of the parallel further sheet sections (B_{L,par}, B_{R,par}) as well as the sections of the first sheet section (B_{M}) which are arranged between those sheet sections (B_{L,par}, B_{R,par}) and the revolving band (5) are pressed onto the revolving band (5) by means of rolls (6) so that a sufficient friction is created between the revolving band (5) and the substrate, to convey the sheet-like substrate synchronous with the revolving band (5).

9. Method according to one of claims 1 to 8, **characterized in that** the first sheet section (B_{M}) of the flat, flexible material is held by a vacuum on the surface of the guiding element (2) in the region of the concave formed section (3) of the guiding element (2).

## Revendications

1. Procédé pour la préparation continue d'un brin sans fin de matériau synthétique réactif de polyuréthane,
a) dans lequel les composants réactifs polyol et isocyanate sont d'abord introduits de manière dosée dans un mélangeur (1),
b) dans lequel les composants réactifs dans le mélangeur (1) sont ensuite mélangés de manière à obtenir un mélange de réactifs,
c) dans lequel le mélange réactif est ensuite évacué dans l'atmosphère environnante et
d) dans lequel une première section de bande (B_{M}) en un matériau plat, souple, en particulier une bande en papier, en feuille ou en tissu, avancée en continu dans un sens d'avancement (T), est mouillée par le mélange réactif,
le procédé présentant en outre les étapes consistant à :
e) guider la première section de bande (B_{M}) sur un élément de guidage (2), qui présente une section (3) de forme concave et une section (4) plane consécutive à celle-ci dans le sens d'avancement (T) ;
f) alimenter deux sections de bande (B_{L}, B_{R}) latérales vers la première section de bande (B_{M}), l'alimentation ayant lieu dans les deux zones d'extrémité latérales de la première section de bande (B_{M}) et la première section de bande (B_{M}) et les deux sections de bande (B_{L}, B_{R}) latérales étant formées par pliage à partir d'une section de bande unique en matériau plat ;
g) guider les deux sections de bande (B_{L}, B_{R}) latérales et la première section de bande (B_{M}), de manière telle qu'il se forme une structure de type cuve pour recevoir le mélange réactif, qui est déplacée en continu dans le sens d'avancement (T), la première section de bande (B_{M}) étant liée de manière étanche avec les deux sections de bande (B_{L}, B_{R}) latérales de manière telle que le mélange réactif ne peut pas sortir dans l'atmosphère environnante entre les sections de bande (B_{M}, B_{L}, B_{R}).

2. Procédé selon la revendication 1, **caractérisé en ce que** la réunion des deux sections de bande (B_{L}, B_{R}) latérales avec la première section de bande (B_{M}) a lieu dans la zone de la section (3) de forme concave de l'élément de guidage (2).

3. Procédé selon la revendication 1 ou 2, **caractérisé en ce que** le procédé comprend en outre les étapes consistant à :
h) dérouler une bande plane du matériau d'un rouleau ;
i) réaliser un premier et un deuxième pliage de la bande plane, lors duquel les deux sections latérales, externes de la bande sont pliées de 180° vers l'intérieur de manière telle qu'il se forme un pli en forme de C avec un premier bord de pliage (K_{L0}) entre la première section de bande (B_{M}) et l'une section de bande (B_{L}) latérale et avec un deuxième bord de pliage (K_{R0}) entre la première section de bande (B_{M}) et l'autre section de bande (B_{R}) latérale ;
j) guider la bande pourvue du pli en forme de C sur la section (3) de forme concave de l'élément de guidage (2) ;
k) relever les deux sections de bande (B_{L}, B_{R}) latérales pliées vers l'intérieur dans la zone de la section (3) de forme concave de manière telle qu'au moins les sections externes des sections de bande (B_{L}, B_{R}) latérales d'abord pliées vers l'intérieur de 180° sont pliées davantage de telle sorte qu'au moins les sections externes (B_{L,perp}, B_{R,perp}) de ces sections de bande (B_{L}, B_{R}) latérales sont orientées perpendiculairement par rapport à la première section de bande (B_{M}) pour former, ensemble avec la première section de bande (B_{M}) la structure de type cuve pour recevoir le mélange réactif.

4. Procédé selon la revendication 3, **caractérisé en ce que** les sections de bande (B_{L}, B_{R}) latérales, après la déformation selon l'étape k) de la revendication 3 dans la zone de la section (3) de forme concave, sont formées dans la zone de la section (4) plane de l'élément de guidage (2) de telle sorte qu'à chaque fois une section de bande (B_{L,perp}, B_{R,perp}) est orientée perpendiculairement par rapport à la première section de bande (B_{M}) pendant qu'à chaque fois une autre section de bande (B_{L,par}, B_{R,par}) est orientée parallèlement par rapport à la première section de bande (B_{M}).

5. Procédé selon l'une quelconque des revendications 1 à 4, **caractérisé en ce que** la cuve délimitée latéralement par les sections de bande (B_{L}, B_{R}) latérales devient plus large dans la zone de la section (3) de forme concave lors de sa progression dans le sens d'avancement (T).

6. Procédé selon l'une quelconque des revendications 3 à 5, **caractérisé en ce que** la position géométrique du bord de formage (U) pour le formage du pli en forme de C selon l'étape i) de la revendication 3 dans la position relevée selon l'étape k) de la revendication 3 dans la zone de la section (3) de forme concave est obtenue comme le contour d'intersection géométrique de deux surfaces, l'une surface étant une surface qui s'étend de manière équidistante d'une valeur entre 0,1 mm et 5 mm au-dessus de l'élément de guidage (2) et l'autre surface étant un plan (E), qui comprend la droite d'intersection entre la première section de bande (B_{M}) et la section de bande (B_{L,perp}, B_{R,perp}) orientée perpendiculairement selon l'étape k) de la revendication 3, ce plan (E) étant incliné par rapport à la section de bande (B_{L,perp}, B_{R,perp}) orientée perpendiculairement d'un angle (α), de préférence de 45°, par rapport à l'intérieur de la structure de type cuve.

7. Procédé selon l'une quelconque des revendications 1 à 6, **caractérisé en ce que** l'appui pour la première section de bande (B_{M}) dans la zone en aval, dans le sens d'avancement (T), de la section (3) de forme concave de l'élément de guidage (2) est formé par une bande (5) tournante.

8. Procédé selon la revendication 4 et la revendication 7, **caractérisé en ce que** le substrat plié, plat, en forme de bande des autres sections de bande (B_{L,par}, B_{R,par}) parallèles ainsi que les sections de la première section de bande (B_{M}) se trouvant entre ces sections de bande (B_{L,par}, B_{R,par}) et la bande (5) tournante sont pressés au moyen de rouleaux (6) sur la bande (5) tournante, de manière telle qu'il se forme une liaison par frottement suffisante entre la bande (5) tournante et le substrat pour entraîner le substrat sous forme de bande avec la bande (5) tournante.

9. Procédé selon l'une quelconque des revendications 1 à 8, **caractérisé en ce que** la première section de bande (B_{M}) du matériau souple, plat, dans la zone de la section (3) de forme concave de l'élément de guidage (2) est maintenue par une dépression sur la surface de l'élément de guidage (2).
